# EUROPEAN PATENT APPLICATION

(11) **EP 4 679 558 A1**
(43) Date of publication of application: **14.01.2026**
(21) Application number: 24920632.7
(22) Date of filing: 19.12.2024
(51) Int. Cl.: H01M 10/42, H01M 10/6567, H01M 10/653, H01M 50/271, H01M 50/249, A62C 3/16, A62D 1/00

(54) **BATTERY PACK AND VEHICLE DEVICE INCLUDING SAME**

(30) Priority: 25.01.2024 KR 20240011561
(71) Applicant: LG Energy Solution, Ltd., Seoul 07335 (KR)
(72) Inventor: KIM, Seung Joon, Daejeon 34122 (KR); RO, Yong Hwan, Daejeon 34122 (KR); PARK, Jin Yong, Daejeon 34122 (KR); CHI, Ho June, Daejeon 34122 (KR)
(74) Representative: Hoffmann Eitle
(86) International application number: PCT/KR2024/097174
(87) International publication number: WO 2025/159386

(57) **Abstract**

A battery pack according to an embodiment of the present disclosure comprises: a plurality of battery cells; a pack frame to which the battery cells are directly mounted or the battery cells are mounted in the state of being housed in a module frame; a pack cover that covers the pack frame; and one or more frame members provided on the pack cover and containing cooling water or fire extinguishing water.

## Description

### [TECHNICAL FIELD]

### Cross-Reference to Related Application(s)

This application claims priority to and the benefit of Korean Patent Application No. 10-2024-0011561, filed on January 25, 2024, with the Korean Intellectual Property Office, the disclosure of which is incorporated herein by reference in its entirety.

The present disclosure relates to a battery pack and a vehicle device including the same, and more particularly, to a battery pack that can lower a surface temperature of the battery pack and thus prevent a surface ignition of the battery pack, and a vehicle device including the same.

### [BACKGROUND]

The use of mobile devices such as cell phones, laptops, camcorders, and digital cameras has been routinized in modern society, which accelerates the development of technologies in the fields related to the mobile devices. Further, as a measure to solve the atmospheric pollution caused from existing gasoline vehicles that uses fossil fuels, rechargeable secondary batteries are being used as power sources for electric vehicles (EV), hybrid electric vehicles (HEV), plug-in hybrid electric vehicles (P-HEV) and so on. Thus, the necessity to develop the secondary batteries is increasing.

Presently, commercially available batteries include nickel-cadmium batteries, nickel-hydrogen batteries, nickel-zinc batteries, and lithium batteries. Of these batteries, lithium secondary batteries are emerging as the most popular, as they do not suffer from the memory effect, and therefore, are freely rechargeable, have low self-discharge rates, and have high energy density, as compared to nickel-based secondary batteries.

Typically, a lithium secondary battery uses a lithium-based oxide and a carbon material as a positive electrode active material and a negative electrode active material, respectively. The lithium secondary battery includes an electrode assembly fabricated by disposing a separator between a positive electrode plate and a negative electrode plate, which are coated with the positive electrode active material and the negative electrode active material, respectively, and a battery case that hermetically houses the electrode assembly together with an electrolyte.

In general, according to the exterior shapes of battery cases, lithium secondary batteries may be classified into can-shaped secondary batteries fabricated by mounting the electrode assembly in a metal can, and pouch-shaped secondary batteries fabricated by mounting the electrode assembly in a pouch made of an aluminum laminate sheet.

In case of secondary batteries used for small-size devices, two or three battery cells are arranged, and in case of secondary batteries used for medium- and large-size vehicle devices such as automobiles, a battery module is used, which includes multiple battery cells electrically connected to each other. In the battery module, the multiple battery cells are connected in series or parallel to form a battery cell stack, which improves the capacity and the power. One or more battery modules may be mounted together with various control and protection systems such as a battery management system (BMS), a battery disconnect unit (BDU), and a cooling system to form a battery pack.

A battery pack may include a battery module as a subordinate concept thereof, and the battery module may include a battery cell as a subordinate concept thereof. In addition, the number of battery cells included in the battery module or the number of battery modules included in the battery pack may be variously determined according to the output or capacity of the battery pack required for an electric vehicle.

However, safety is one of the most important issues in such a battery pack. In particular, when a thermal event occurs in any of a plurality of battery cells included in a battery pack, high-temperature venting gas and heat are generated.

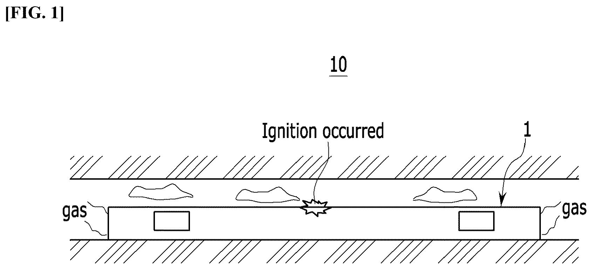

FIG. 1 is a cross-sectional view showing a conventional battery pack and a conventional chassis inside a vehicle device.

Referring to FIG. 1, when thermal runaway occurs, high-temperature venting gas is discharged from the side surface of a conventional battery pack 1. Due to thermal runaway inside the conventional battery pack 1, the surface temperature of the conventional battery pack 1 is increased. The high-temperature venting gas flows into the surface of the conventional battery pack 1 from the inside of the conventional chassis 10. At this time, the high-temperature venting gas ignites the surface of the conventional battery pack 1. Since such ignition can lead to an explosion of the battery pack 1 and the vehicle device including the same, there is a need to lower the surface temperature of the battery pack in order to prevent such a surface ignition of the battery pack.

### [DETAILED DESCRIPTION OF THE INVENTION]

### [Technical Problem]

The object to solved by the invention is to prevent a surface ignition of a battery pack when a thermal runaway occurs. Specifically, an object of the present disclosure is to provide a battery pack that can lower a surface temperature of the battery pack and thus prevent a surface ignition of the battery pack, and a vehicle device including the same.

However, the technical objects solved by the embodiments of the present disclosure are not limited to those disclosed above, and may be expanded in various ways within the scope of the technical idea included in the present disclosure.

### [Technical Solution]

A battery pack according to an embodiment of the present disclosure comprises: a plurality of battery cells; a pack frame to which the battery cells are directly mounted or the battery cells are mounted in the state of being housed in a module frame; a pack cover that covers the pack frame; and one or more frame members provided on the pack cover and containing cooling water or fire extinguishing water.

The pack frame is a tubular member that has a cavity part therein and extends in one direction, and the cooling water or the fire extinguishing water is contained in the cavity part.

The frame member may comprise a TIM (Thermal Interface Material) pad that abuts against the pack cover.

The battery pack may comprise an adhesive tape located between the frame member and the TIM pad.

The frame member may comprise one or more valves that discharge cooling water or fire extinguishing water.

The valve may comprise a discharge port directed toward the pack cover.

The frame member may comprise a mounting part having a mounting hole formed therein, and a mounting bolt may passe through the mounting hole to be fastened to at least one of the pack cover or the pack frame.

The frame member may comprise a first cavity part and a second cavity part that contain the cooling water or the fire extinguishing water, and the mounting part may be located between the first cavity part and the second cavity part.

The frame member may be welded and joined to the pack cover.

A vehicle device according to another embodiment of the present disclosure comprises the battery pack, wherein the frame member is fixed to each of the pack cover and the chassis inside the vehicle device, between the pack cover and the chassis inside the vehicle device.

### [Advantageous Effects]

According to embodiments of the present disclosure, the battery pack includes one or more frame members containing cooling water or fire extinguishing water, thereby lowering a surface temperature of the battery pack. Thereby, it is possible to prevent a surface ignition of the battery pack and thus prevent a flame from flowing out.

The effects of the present disclosure are not limited to the effects mentioned above and additional other effects not described above will be clearly understood from the description of the appended claims by those skilled in the art.

### [BRIEF DESCRIPTION OF THE DRAWING]

FIG. 1 is a cross-sectional view showing a conventional battery pack and a conventional chassis inside a vehicle device.
FIG. 2 is an exploded perspective view showing a battery pack according to an embodiment of the present disclosure.
FIG. 3 is a perspective view showing a battery pack according to an embodiment of the present disclosure.
FIG. 4 is a plan view showing a battery pack according to an embodiment of the present disclosure.
FIG. 5 is a plan view showing a battery pack according to an embodiment of the present disclosure.
FIG. 6 is a cross-sectional view showing a cross section taken along the cutting line A-A' of FIG. 4.
FIG. 7 is a cross-sectional view of a battery pack according to another embodiment of the present disclosure.
FIG. 8 is a cross-sectional view of a battery pack according to another embodiment of the present disclosure.
FIG. 9 is a cross-sectional view showing a cross section taken along the cutting line B-B' of FIG. 4.
FIG. 10 is a cross-sectional view of a battery pack according to another embodiment of the present disclosure.
FIG. 11 is a partial perspective view showing a discharge port of a valve included in the battery pack.
FIG. 12 is a cross-sectional view showing a cross section of a chassis cut along the cutting line C-C' of FIG. 4.
FIG. 13 is a cross-sectional view of a chassis according to another embodiment of the present disclosure.

### [DETAILED DESCRIPTION OF THE EMBODIMENTS]

Hereinafter, with reference to the accompanying drawings, various embodiments of the present disclosure will be described in detail to the extent that one of ordinary skill in the art can easily practice the present disclosure. The present disclosure may be implemented in various different forms, and is not limited to the embodiments described herein.

In order to clearly describe the present disclosure, descriptions of parts unrelated to the description of the present disclosure will be omitted, and the same or similar components throughout the description will be denoted with the same reference numerals.

Since the drawings arbitrarily illustrate the dimension and thickness of each component for the convenience of description, the present disclosure is not necessarily limited to that illustrated. The drawings depict the thickness in an enlarged scale to clearly show different layers and regions. Further, the drawings exaggerate the thickness of a certain layer or region to facilitate the description thereof.

When a layer, film, region, plate or the like is disposed "on" a specific part, the description includes not only a case where the layer, film, region, plate or the like is disposed "directly on" the specific part, but also a case where the layer, film, region, plate or the like is disposed on the specific part via another part. When a part is disposed "directly on" another part, this indicates that no new component is present between the two parts. Further, when a component is disposed "on" a reference part, this indicates that the component is present at the top of or under the reference part, and does not necessarily indicate that the component is disposed only at the top of the reference part, which is opposite to the direction of gravity.

Throughout the descriptions herein, when a certain part "includes" a component, this does not indicate that the certain part excludes other components, but indicates that the part may further include other components, unless otherwise defined.

Throughout the descriptions herein, the terms "in a plan view" indicate viewing an object from above, and the terms "in a cross-sectional view" indicate viewing a vertical cross section of an object from side.

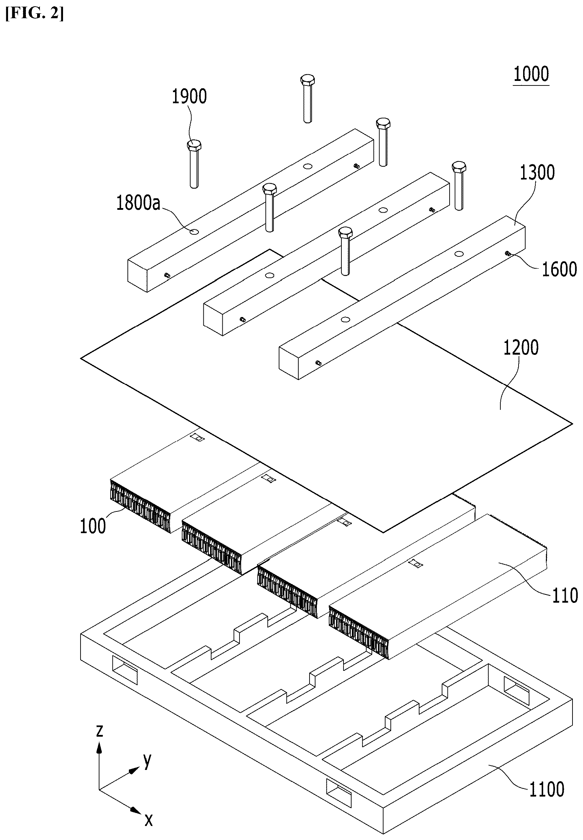

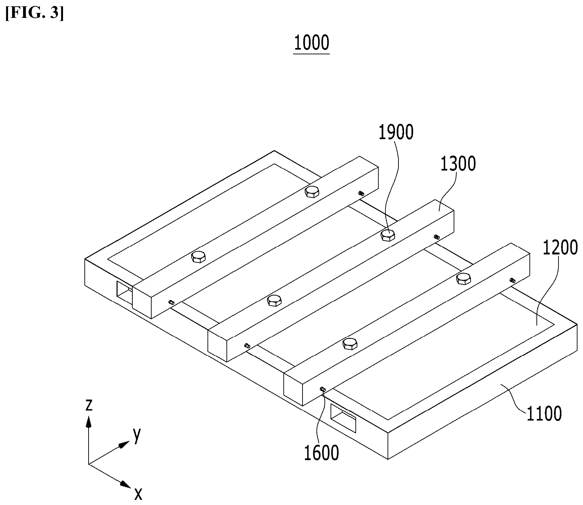

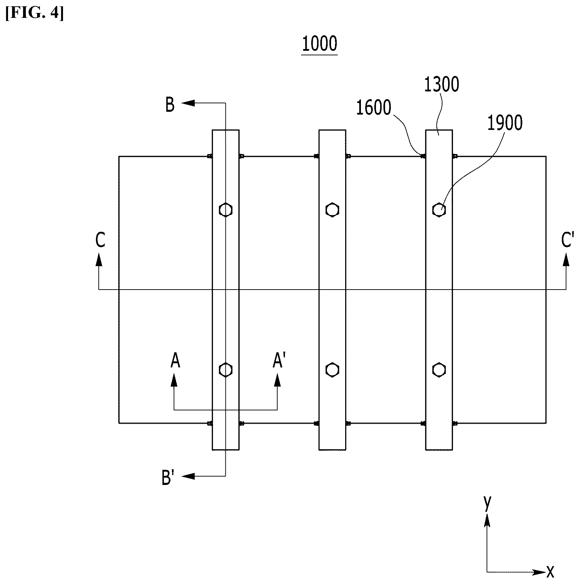

FIG. 2 is an exploded perspective view showing a battery pack 1000 according to an embodiment of the present disclosure. FIG. 3 is a perspective view showing a battery pack 1000 according to an embodiment of the present disclosure. FIG. 4 is a plan view showing a battery pack 1000 according to an embodiment of the present disclosure. Specifically, FIG. 4 is a plan view of a battery pack 1000 as viewed along the -z axis on an xy plane.

Referring to FIGS. 2 to 4, a battery pack 1000 according to an embodiment of the present disclosure comprises a plurality of battery cell 100. The battery pack 1000 comprises a pack frame 1100 to which the battery cells 100 are directly mounted or the battery cells 100 are mounted in the state of being housed in a module frame 110. The battery pack 1000 comprises a pack cover 1200 that covers the pack frame 1100. Further, The battery pack 1000 comprises one or more frame members 1300 provided on the pack cover 1200 and containing cooling water or fire extinguishing water.

The frame member 1300 may have a shape that extends along a direction perpendicular to the longer side direction in width of the battery pack 1000, as shown in FIGS. 2 and 3. Further, the frame member 1300 may be provided in a plurality of numbers, and the plurality of frame members 1300 may be arranged at regular intervals along the longer side direction in width of the battery pack 1000.

According to embodiments of the present disclosure, the battery pack 1000 comprises one or more frame members 1300 containing cooling water or fire extinguishing water, which can lower the surface temperature of the battery pack 1000. Thereby, it is possible to prevent a surface ignition of the battery pack 1000 and thus cut off the outflow of flames and the occurrence of explosions.

The frame member 1300 may include an opening/closing part (not shown) for injecting or discharging cooling water or fire extinguishing water. A user, etc. of a vehicle device can inject or discharge cooling water or fire extinguishing water into or from a frame member 1300 via the opening/closing part in accordance with the remaining amount of cooling water or fire extinguishing water in the frame member 1300.

The frame member 1300 may be provided with a water level sensor (not shown) that can check the remaining amount of cooling water or fire extinguishing water contained in the frame member 1300. The vehicle device may be provided with a water level display unit (not shown) that receives data on the level of cooling water or fire extinguishing water from the water level sensor and displays the water level. Through the water level display unit, the user of the vehicle device can check the level of cooling water or fire extinguishing water.

Further, the vehicle device may be provided with a water level warning display unit that can notify the user of the vehicle device when the level of cooling water or fire extinguishing water contained in the frame member 1300 exceeds or falls below a preset level. When a warning is displayed on the water level warning display unit, the user of the vehicle device can immediately take measures such as repairing the vehicle device.

Further, the user of the vehicle device can easily check whether there is any leakage of cooling water or fire extinguishing water inside the frame member 1300 via the water level display unit and the water level warning display unit.

The frame member 1300 may be provided with a temperature sensor (not shown) that can check the temperature of the cooling water or fire extinguishing water contained in the frame member 1300. The vehicle device may be provided with a temperature display unit (not shown) that receives data related to the temperature of cooling water or fire extinguishing water from the temperature sensor and displays the temperature. Through the temperature display unit, a user of the vehicle device can check the temperature of the cooling water or fire extinguishing water.

Further, the vehicle device may be provided with a temperature warning display unit that can notify the user of the vehicle device when the temperature of the cooling water or fire extinguishing water contained in the frame member 1300 exceeds a preset temperature. When a warning is displayed on the temperature warning display unit, the user of the vehicle device can immediately take measures such as repair of the vehicle device.

A transparent glass (not shown) that allows the remaining amount of cooling water or fire extinguishing water contained in frame member 1300 to be visually confirmed may be provided on the side surface of the frame member 1300. Thereby, the user of the vehicle device or a mechanic can directly and visually check the remaining amount of cooling water or fire extinguishing water contained in the frame member 1300.

The frame member 1300 may be provided with a hose (not shown) for injecting or discharging cooling water or fire extinguishing water into or from the frame member 1300. The hose may be in communication with the frame member 1300 via an opening/closing part, or may be in communication with the frame member 1300 directly without through an opening/closing part.

The frame member 1300 may be welded and joined to the pack cover 1200. The frame member 1300 can be more reliably fixed to the pack cover 1200 through the welding and joining process between the frame member 1300 and the pack cover 1200, thereby ensuring the mechanical rigidity of the battery pack 1000.

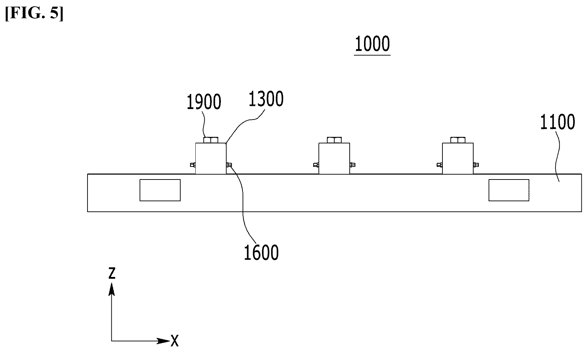

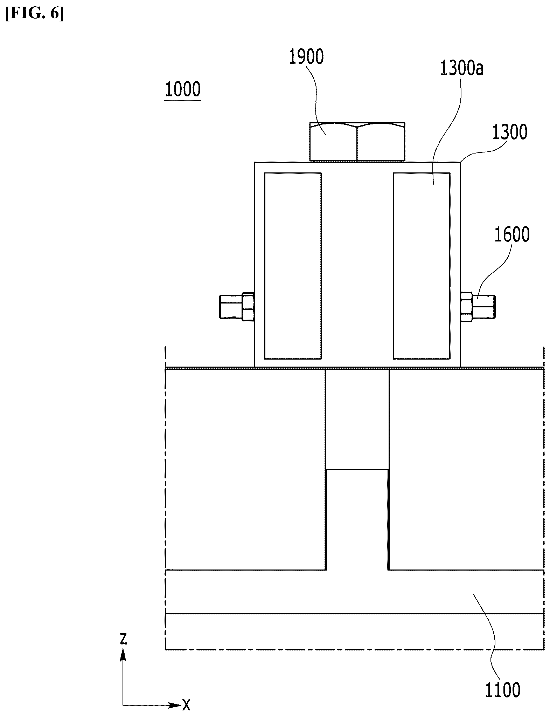

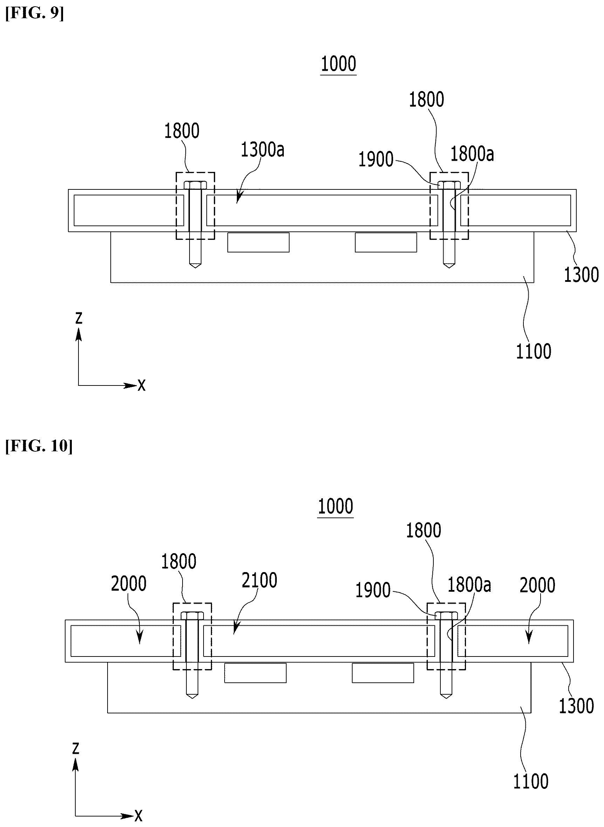

The welding-related factors such as the welding method, welding area, and welding agent can be appropriately determined taking into consideration the size of the battery pack 1000, the size and weight of the frame member 1300, the material properties of the battery pack 1000 and the frame member 1300, etc. FIG. 5 is a plan view showing a battery pack 1000 according to an embodiment of the present disclosure. Specifically, FIG. 5 is a plan view of the battery pack 1000 as viewed along the y-axis direction on the xz plane. FIG. 6 is a cross-sectional view showing a cross section taken along the cutting line A-A' of FIG. 4. FIG. 9 is a cross-sectional view showing a cross section taken along the cutting line B-B' of FIG. 4.

Referring to FIGS. 4 to 6 and 9, the frame member 1300 may be a tubular member that has a cavity part 1300a therein and extends in one direction. However, the frame member 1300 in the present disclosure is not limited to a tubular form, and may be sufficient as long as it has a shape capable of retaining a liquid such as cooling water or fire extinguishing water.

The cavity part 1300a may contain cooling water or fire extinguishing water. The cooling water or fire extinguishing water may be one of the known ones or a mixture thereof, and any one of the known ones can be used as long as it is retained in the cavity part 1300a inside the frame member 1300 and thus can release the heat of the battery cells 100.

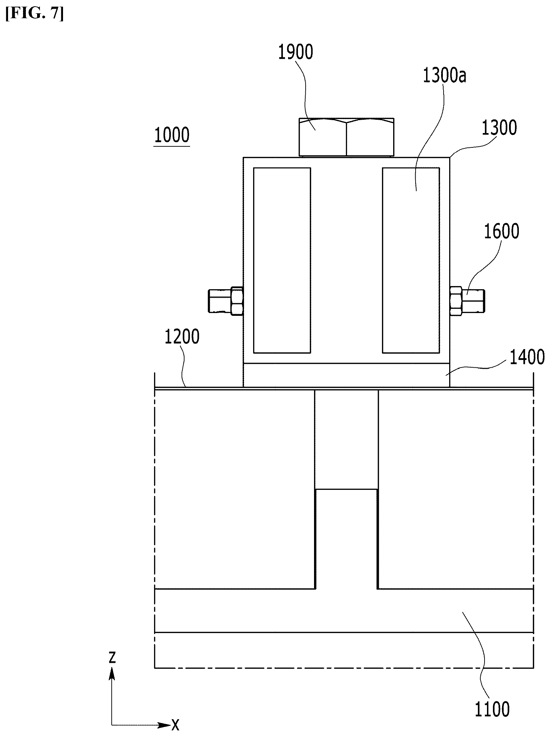

FIG. 7 is a cross-sectional view of a battery pack 1000 according to another embodiment of the present disclosure.

Referring to FIG. 7, a frame member 1300 according to another embodiment of the present disclosure may include a TIM (Thermal Interface Material) pad 1400 that abuts against a pack cover 1200. A TIM pad 1400 is provided between the frame member 1300 and the pack cover 1200, so that heat of the pack cover 1200 can be effectively transferred to the frame member 1300. This make it possible to effectively reduce the temperature of the surface of the battery pack 1000 prevent ignition of the surface of the battery pack 1000, thereby preventing flames from flowing out.

The types of the TIM pad 1400 are various, such as heat-dissipating grease, heat-dissipating sheets, metal plates, and heat-conductive adhesives, and any of the known ones may be used as long as it can transfer heat of the pack cover 1200 to the frame member 1300.

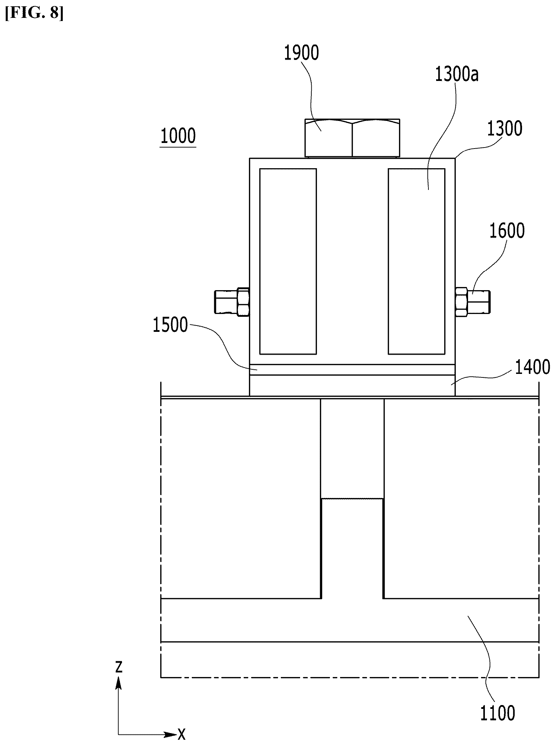

FIG. 8 is a cross-sectional view of a battery pack 1000 according to another embodiment of the present disclosure.

Referring to FIG. 8, a battery pack 1000 according to another embodiment of the present disclosure may include an adhesive tape 1500 located between the frame member 1300 and the TIM pad 1400. The battery pack 1000 includes an adhesive tape 1500, which may be fixed between the frame member 1300 and the TIM pad 1400, thereby ensuring mechanical rigidity of the battery pack 1000 in situations such as vibration and impact of a vehicle device.

The material, area, thickness and the like of the adhesive tape 1500 may be appropriately determined taking into consideration the size, area, weight, material properties, required adhesive force, thermal conductivity and the like of the frame member 1300 and the TIM pad 1400.

Referring again to FIGS. 3 to 6, the frame member 1300 may include one or more valves 1600 that discharge cooling water or fire extinguishing water.

The cooling water or fire extinguishing water discharged by the valve 1600 may be vaporized by the heat of the surface of the battery pack when thermal runaway occurs. By vaporizing the cooling water or fire extinguishing water, that is, by changing the phase of the cooling water or fire extinguishing water from liquid to gas, the surface heat of the battery pack is taken away, so that the surface temperature of the battery pack may be lowered. Thereby, it is possible to prevent the surface of the battery pack from igniting and thus prevent flames from flowing out.

The number, position, type and the like of the valve 1600 can be appropriately determined taking into consideration the size of the battery pack 1000, the capacity of the cooling water or fire extinguishing water in the frame member 1300.

The valve 1600 can automatically discharge the cooling water or fire extinguishing agent in linking with the water level sensor and the temperature sensor in the frame member 1300.

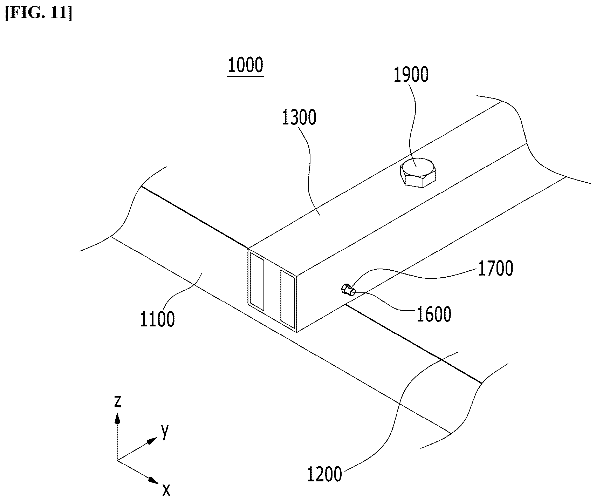

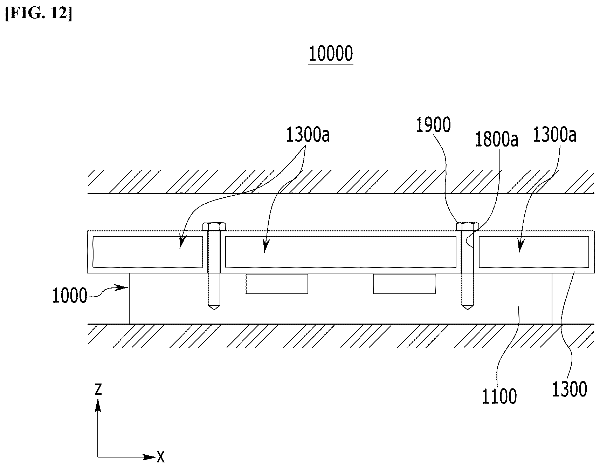

FIG. 11 is a partial perspective view showing a discharge port 1700 of a valve 1600 included in the battery pack 1000. FIG. 12 is a cross-sectional view showing a cross section of a chassis 10000 cut along the cutting line C-C' of FIG. 4.

Referring to FIGS. 11 and 12, the valve 1600 may include a discharge port 1700 directed toward the pack cover 1200.

Since the discharge port 1700 of the valve 1600 is directed toward the pack cover 1200, the cooling water or fire extinguishing water discharged from the discharge port 1700 of the valve 1600 can be mixed with the venting gas discharged from the battery pack 1000. As a result, it is possible to lower the concentration of flammable substances in gas diffused inside the chassis 10000, thereby preventing a surface ignition of the battery pack 1000, and further preventing occurrence of explosion inside the chassis 10000 due to ignition.

The discharge port 1700 may be directed along the longer side direction in width of the battery pack 1000. Referring again to FIG. 9, the frame member 1300 may include a mounting part 1800 having a mounting hole 1800a formed therein. A mounting bolt 1900 may pass through the mounting hole 1800a and be fastened to at least one of the pack cover 1200 or the pack frame 1100. That is, the mounting part 1800 includes a mounting hole.

Further, the pack cover 1200 includes a fastening hole (not shown) at a position corresponding to the mounting hole 1800a. In a state where the mounting hole 1800a and the fastening hole are aligned, a mounting bolt 1900 passing through them is fastened, so that the frame member 1300 is fixed to the battery pack 1000. As one example, the mounting bolt 1900 may be fastened to the pack cover 1200. As another example, the mounting bolt 1900 may be fastened to both the pack cover 1200 and the pack frame 1100. As an example, the pack frame 1100 may include a vertical beam for partitioning the battery cells 100 into sections. For stable fastening, the mounting bolt 1900 may pass through the mounting hole 1800a and the fastening hole of the pack cover 1200, and then be fastened to the vertical beam. Alternatively, the mounting bolt 1900 can passe through the vertical beam and then be bolt-engaged to a separate nut member.

For effective fastening, the mounting part 1800 and the mounting bolt 1900 applied to each frame member 1300 are preferably formed in a plurality of numbers.

FIG. 10 is a cross-sectional view of a battery pack according to another embodiment of the present disclosure.

Referring to FIG. 10, a frame member 1300 according to another embodiment of the present disclosure may include a first cavity part 2000 and a second cavity part 2100 that contain cooling water or fire extinguishing water.

The first cavity part 2000 and the second cavity part 2100 may each include a first opening/closing part (not shown) and a second opening/closing part (not shown). A user, etc. of a vehicle device may inject or discharge cooling water or fire extinguishing water into or from both the first cavity part 2000 and the second cavity part 2100, or either one of the first cavity part 2000 and the second cavity part 2100, in accordance with the remaining amount of cooling water or fire extinguishing water in the first cavity part 2000 and the second cavity part 2100, via the first opening/closing part and the second opening/closing part.

The first cavity part 2000 and the second cavity part 2100 may be respectively provided with a first water level sensor (not shown) and a second water level sensor (not shown). The vehicle device can be provided with a first water level display unit and a second water level display unit that receive data related to the water levels of the cooling water or fire extinguishing water in the first cavity part 2000 and the second cavity part 2100 from the first water level sensor and the second water level sensor, respectively, and display the water levels. Through the first water level display unit and the second water level display unit, the user of the vehicle device may check the water levels of the cooling water or fire extinguishing water in the first cavity part 2000 and the second cavity part 2100, respectively.

Further, the vehicle device may be provided with a first water level warning display unit and a second water level warning display unit that can notify the user of the vehicle device when the level of the cooling water or fire extinguishing water in the first cavity part 2000 or the second cavity part 2100 exceeds or falls below a preset level. If a warning is displayed on both the first water level warning display unit and the second water level warning display unit, or a warning is displayed on either one of the first water level warning display unit and the second water level warning display unit, the user of the vehicle device can immediately take measures such as repair of the vehicle device.

Further the user of the vehicle device can easily check whether there is any leakage of cooling or fire extinguishing water in the frame member 1300 via the first water level display unit, the second water level display unit, the first water level warning display unit, the second water level warning display unit, and the like.

The first cavity part 2000 and the second cavity part 2100 may be respectively provided with a first temperature sensor (not shown) and a second temperature sensor (not shown). The vehicle device may be provided with a first temperature display unit and a second temperature display unit that receive data related to the temperature of the cooling water or extinguishing water in the first cavity part 2000 and the second cavity part 2100 from the first temperature sensor and the second temperature sensor, respectively, and display the temperature. Through the first temperature display unit and the second temperature display unit, the user of the vehicle device can check the temperature of the cooling water or fire extinguishing water in the first cavity part 2000 and the second cavity part 2100, respectively.

Further, the vehicle device may be provided with a first temperature warning display unit and a second temperature warning display unit that can notify the user of the vehicle device when the temperature of the cooling water or fire extinguishing water in the first cavity part 2000 or the second cavity part 2100 exceeds or falls below a preset temperature. If a warning is displayed on both the first temperature warning display unit and the second temperature warning display unit, or if a warning is displayed on either one of the first temperature warning display unit and the second temperature warning display unit, the user of the vehicle device can immediately take measures such as repair of the vehicle device.

Further, the user of the vehicle device can easily check whether there is any leakage of cooling water or fire extinguishing water in the frame member 1300 via the first temperature display unit, the second temperature display unit, the first temperature warning display unit, the second temperature warning display unit, and the like.

The first cavity part 2000 and the second cavity part 2100 may be provided with a first hose and a second hose for injecting or discharging cooling water or fire extinguishing water into or from the first cavity part 2000 and the second cavity part 2100, respectively. The first hose and the second hose may communicate with the first cavity part 2000 and the second cavity part 2100 via the first opening/closing part and the second opening/closing part, or may communicate directly with the frame member 1300 without through the first opening/closing part and the second opening/closing part.

The first cavity part 2000 and the second cavity part 2100 may be respectively provided with a valve 1600. Depending on the temperature or remaining amount of the cooling water or fire extinguishing water in the first cavity part 2000 and the second cavity part 2100, each valve 1600 can independently discharge the cooling water or fire extinguishing water. Specifically, regardless of whether or not the valve 1600 provided in the second cavity part 2100 is operated, only the valve 1600 provided in the first cavity part 2000 can be operated to discharge the cooling water or fire extinguishing water in the first cavity part 2000.

A mounting part 1800 may be located between the first cavity part 2000 and the second cavity part 2100. That is, the first cavity part 2000 and the second cavity part 2100 may be partitioned by the mounting part 1800.

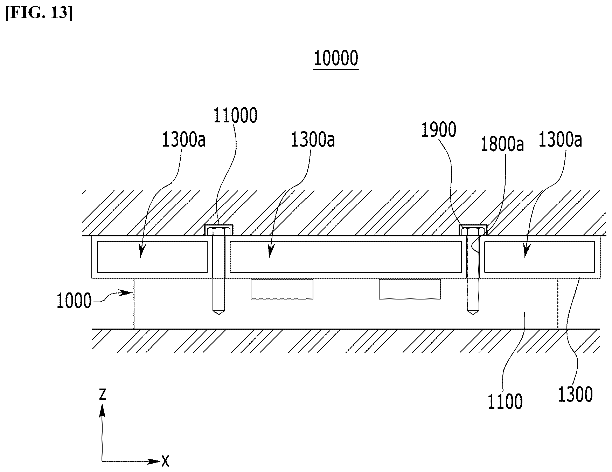

FIG. 13 is a cross-sectional view of a chassis 10000 according to another embodiment of the present disclosure.

Referring to FIGS. 12 and 13, a vehicle device according to another embodiment of the present disclosure may include a battery pack 1000.

The frame member 1300 may be fixed to each of the pack cover 1200 and the chassis 10000 inside the vehicle device, between the pack cover 1200 and the chassis 10000 inside the vehicle device. Thereby, the frame member 1300 is fixed even in situations such as vibration or impact of the vehicle device, so that mechanical rigidity can be secured and ignition inside the chassis 10000 can be prevented.

As shown in FIG. 12, the frame member 1300 may be fixed to the pack cover 1200 between the pack cover 1200 and the chassis 10000 inside the vehicle device. Specifically, the frame member 1300 may be fixed to the pack cover 1200 and the chassis 10000 inside the vehicle device, between the pack cover 1200 and the chassis 10000 inside the vehicle device. Thereby, the frame member 1300 may be fixed to each of the pack cover 1200 and the chassis 10000 inside the vehicle device, between the pack cover 1200 and the chassis 10000 inside the vehicle device.

Through the surface contact between the chassis 10000 and the frame member 1300, the frame member 1300 can be fixed to the chassis 10000 while minimizing a space between the upper ends. In this case, a gasket (not shown) or the like can be provided between the frame member 1300 and the chassis 10000.

The chassis 10000 can include a recessed part 11000 having a concave shape corresponding to the protruding shape of the mounting bolt 1900.

Further, the frame member 1300 can be fixed to the chassis 10000 by a bolt/nut coupling, but is not limited thereto.

Although not shown in the figure, the frame member can be fixed only to the chassis inside the vehicle device, between the pack cover and the chassis inside the vehicle device.

In the embodiments above, expressions indicating directions such as "front," "rear," "left," "right," "up," and "down" have been used. These expressions are used only to facilitate the description, and may vary, for example, depending on the location of a target object or an observer.

While the embodiments of the present disclosure have been described in detail, the technical scope of the present disclosure is not limited to the embodiments, and also includes various modifications and improvements made by one of ordinary skill in the art using the concepts defined in the claims attached therewith.

### [Description of Reference Numerals]

1000: battery pack
1100: pack frame
1200: pack cover
1300: frame member
1300a: cavity part
1400: TIM pad
1500: adhesive tape
1600: valve
1700: discharge port
10000: chassis

## Claims

1. A battery pack, comprising:
a plurality of battery cells;
a pack frame to which the battery cells are directly mounted or the battery cells are mounted in the state of being housed in a module frame;
a pack cover that covers the pack frame; and
one or more frame members provided on the pack cover and containing cooling water or fire extinguishing water.

2. The battery pack according to claim1,
wherein the pack frame is a tubular member that has a cavity part therein and extends in one direction, and the cooling water or the fire extinguishing water is contained in the cavity part.

3. The battery pack according to claim 1,
wherein the frame member comprises a TIM (Thermal Interface Material) pad that abuts against the pack cover.

4. The battery pack according to claim 3,
comprising an adhesive tape located between the frame member and the TIM pad.

5. The battery pack according to claim 1,
wherein the frame member comprises one or more valves that discharge cooling water or fire extinguishing water.

6. The battery pack according to claim 5,
wherein the valve comprises a discharge port directed toward the pack cover.

7. The battery pack according to claim 1,
wherein the frame member comprises a mounting part having a mounting hole formed therein, and
a mounting bolt passes through the mounting hole to be fastened to at least one of the pack cover or the pack frame.

8. The battery pack according to claim 7,
wherein the frame member comprises a first cavity part and a second cavity part that contain the cooling water or the fire extinguishing water, and the mounting part is located between the first cavity part and the second cavity part.

9. The battery pack according to claim 1,
wherein the frame member is welded and joined to the pack cover.

10. A vehicle device comprising the battery pack according to claim 1,
wherein the frame member is fixed to each of the pack cover and the chassis inside the vehicle device, between the pack cover and the chassis inside the vehicle device.
